# EUROPÄISCHE PATENTSCHRIFT

(11) **EP 0 641 943 B1**
(45) Veröffentlichungstag und Bekanntmachung des Hinweises auf die Patenterteilung: **02.12.1998**
(21) Anmeldenummer: 94110921.7
(22) Anmeldetag: 13.07.1994
(51) Int. Cl.: F16B 37/04

(54) **Nutenstein**
Nut for grooves
Ecrou pour rainures

(30) Priorität: 30.08.1993 DE 9312997 U
(43) Veröffentlichungstag der Anmeldung: 08.03.1995
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Eichler, Peter, Dipl.-Ing.

(56) Entgegenhaltungen:
- EP-A- 0 136 431
- EP-A- 0 516 321
- DE-A- 1 923 669
- DE-U- 6 750 452
- FR-A- 1 546 776

## Beschreibung

Die Erfindung bezieht sich auf einen Nutenstein mit den im Oberbegriff des Anspruchs 1 angegebenen Merkmalen.

Ein Nutenstein mit den eingangs genannten Merkmalen ist aus der DE-A-1 923 669 bekannt. Der bekannte Nutenstein hat trapezförmigen Querschnitt und Längsschlitze, so daß er in hinterschnittene Nuten eingepreßt werden kann und dann unter Abstützen auf dem Profilnutboden einrastet. An den profilnutbodenseitigen Kanten des Nutensteins sind sich im wesentlichen über die gesamte Kantenlänge erstreckende Federbügelarme vorhanden, die den Nutenstein etwa auf Höhe der zentralen Schraubgewindebohrung abstützen. Ein solcher Nutenstein ist für schlanke Nuten nicht geeignet.

Nutensteine ähnlicher Art sind aus der EP 0 136 431 bekannt. Sie dienen generell zur Schraubbefestigung von auf mit solchen hinterschnittenen Nuten versehenen Profilstäben od.dgl. anzubringenden Bauelementen, die dazu über eine in die Schraubgewindebohrung des Nutensteins einzudrehende Befestigungsschraube fixiert werden, wobei der Nutenstein mit den Rändern seiner flachen Oberseite fest gegen die Unterseite der den Profilnutschlitz beidseitig flankierenden Profilnutschenkel gepreßt wird. Durch seinen im wesentlichen keilförmigen Querschnitt muß der Nutenstein nicht unbedingt seitlich in die Profilnut eingeschoben werden. Vielmehr kann er an jeder beliebigen Stelle des Profilstabes leicht in die Profilnut eingeschwenkt werden, wobei er in der betreffenden Axiallage in der Profilnut durch die auf dessen Boden aufliegende Klemmstelle leicht klemmend gehalten werden kann. Bei den bekannten Nutensteinen wird die im Bereich ihrer Keilscheitellinie liegende Klemmstelle von einer Klemmkugel gebildet, die in eine mit einer entsprechenden Druckfeder versehene Kleinbohrung im Nutenstein abgefedert gelagert ist. Der Nutenstein selber besteht dabei insgesamt aus Stahl. Die Herstellung dieses bekannten Nutensteines ist aber noch verhältnismäßig aufwendig, insbesondere auch bezüglich seiner Klemmkugel-Beschaffenheit und -Lagerung.

Der Erfindung liegt daher die Aufgabe zugrunde, einen Nutenstein mit den Merkmalen des Oberbegriffs des Anspruchs so zu verbessern, daß er wesentlich einfacher und preiswerter herzustellen ist.

Diese Aufgabe wird ausgehend von einem Nutenstein der in Rede stehenden Gattung erfindungsgemäß dadurch gelöst, daß ein Federbügelarm im Bereich einer Keilscheitellinie eines einschwenkbaren Nutensteins angeordnet ist sowie an seinem freien, federnd nachgiebigen Ende die Klemmstelle aufweist, und daß die Schraubgewindebohrung außerhalb eines von dem Längsschlitz gebildeten Bereichs angeordnet ist. Auf diese Weise wird unter Umgehung der aufwendigen Klemmkugel-Bauart die Klemmung des in die hinterschnittene Nut eingeschwenkten Nutensteins einfach durch einen an ihm vorgesehenen, aus entsprechend hartelastischem Kunststoff bestehenden Federbügelarm erreicht, der dazu in besonders einfacher Ausbildung nur leicht schräg gegenüber der Längserstreckung des Nutensteins zu verlaufen braucht, daß er dabei mit seinem freien federnden Ende auf dem Profilnutboden aufliegt und damit die Klemmstelle bildet. Vorteilhafter ist es aber noch, wenn die Klemmstelle aus einem am freien Ende des Kunststoff-Federbügelarms unterseitig angeformten Klemmknopf besteht.

Der Nutenstein kann nach einem weiteren Merkmal der Erfindung ein den keilförmigen Querschnitt besitzendes Basisteil aus Kunststoff aufweisen, das in Längsrichtung etwa hälftig unterteilt, einerseits den zur Ausformung des Federbügelarms mit dem Längsschlitz versehenen Gabelbereich und andererseits einen mit einer die Schraubgewindebohrung enthaltenden, metallischen Einlagebüchse versehenen Bohrungsaufnahmebereich aufweist. Das vorerwähnte Kunststoff-Basisteil, das aus entsprechend hart elastischem Kunststoff, beispielsweise Polyamid oder einem auch unter der Kurzbezeichnung POM bekannten Polyacetal besteht, kann im Spritzgußverfahren leicht hergestellt werden, wobei dann in das so geformte Basisteil lediglich noch die die Schraubgewindebohrung enthaltende metallische Einlagebüchse eingesetzt zu werden braucht. Dafür ist das Kunststoff-Basisteil in seinem Bohrungsaufnahmebereich vorzugsweise mit einer durchgehenden, die metallische Einlagebüchse enthaltenden Aufnahmebohrung und einer oberhalb davon angeordneten flachen Aussparung versehen, auf der die mit einem entsprechenden Randflansch versehene metallische Einlagebüchse aufliegt.

Weiterhin können auf der Oberseite des Kunststoff-Basisteils vorteilhaft zu beiden Seiten der die Schraubgewindebohrung enthaltenden metallischen Einlagebüchse noch verdrehungssichernde Vorsprünge angeformt sein. Diese können bei in die Profilnut eingeschwenktem Nutenstein in den nach außen führenden Schlitz der Profilnut hineinragen. Auf diese Weise wird der in die Profilnut eingeschwenkte Nutenstein in Längsrichtung der Nut verdrehungssichernd und auch gegen Querverschiebung hinreichend sicher ausgerichtet gehalten. Diese verdrehungssichernden Vorsprünge können zugleich auch zur Halterung der in die Aufnahmebohrung eingesteckten metallischen Einlagebüchse dienen, die dazu einen rechteckförmig konturierten Randflansch aufweist, über den an den ihm zugewandten Rändern der verdrehungssichernden Vorsprünge des Basisteils vorhandene Klemmkanten leicht klemmend zu greifen vermögen. Grundsätzlich kann die Befestigung der metallischen Einlagebüchse im Kunststoff- Basisteil auch auf andere Weise klemmend oder auch durch entsprechende Verklebung erfolgen.

In der Zeichnung ist ein vorteilhaftes Ausbildungsbeispiel eines erfindungsgemäß beschaffenen Nutensteins in vergrößertem Maßstab dargestellt. Darin zeigt:
- Fig.1: eine schaubildliche Wiedergabe des Nutensteins,
- Fig.2: eine Stirnansicht des in eine Profilnut eines geschnitten dargestellten Profilstabes eingesetzten Nutensteines und
- Fig.3: eine der Fig.2 entsprechende Darstellung, jedoch im Schnitt nach der Linie III-III der Fig.1.

Der abgebildete Nutenstein ist von zweiteiliger Beschaffenheit. Er besteht aus dem einen im wesentlichen keilförmigen Querschnitt aufweisenden Kunststoff-Basisteil 1 und der darin eingesetzten metallischen Einlagebüchse 2, die mit einer Schraubgewindebohrung 3 versehen ist.

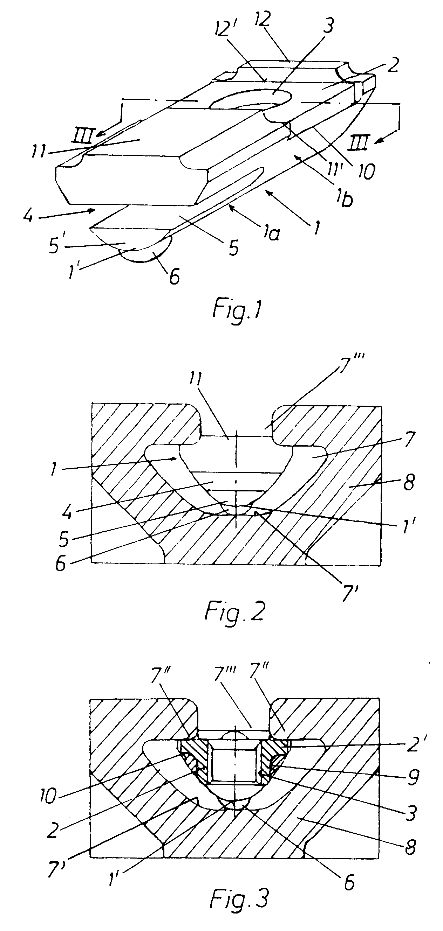

Das aus vergleichsweise hart elastischem Kunststoff, beispielsweise Polyamid oder einem Polyacetal bestehende Basisteil 1 ist in Längsrichtung etwa hälftig in zwei verschiedene Bereiche unterteilt. So besitzt es einen Gabelbereich la einerseits und einen Bohrungsaufnahmebereich 1b andererseits. In dem Gabelbereich la ist ein Längsschlitz 4 vorgesehen, der zur Ausformung des sich in Längsrichtung der Keilscheitellinie 1' des Basisteils 1 erstreckenden Federbügelarms 5 dient, der an seinem freien Ende 5' einen unterseitig angeformten eine Klemmstelle 6 bildenden Klemmknopf aufweist. Mit diesem Klemmknopf liegt der Nutenstein 1 in seinem in Fig.2 und 3 in die Profilnut 7 eines Profilstabes 8 od.dgl. eingeschwenkten Zustand am Boden 7' der Profilnut klemmend auf, wodurch eine hinreichende Sicherung gegen Axialverschiebung in der Nut erzielt wird. Anstelle eines besonders ausgeformten Klemmknopfes könnte der aus Kunststoff bestehende Federbügelarm 5 aber auch leicht schräg gegenüber der Längserstreckung des Basisteils 1 verlaufend ausgebildet sein, so daß er dann mit seinem freien nachgiebigen Ende 5' ebenfalls klemmend am Profilnutboden 7' aufliegen kann.

Im Bohrungsaufnahmebereich 1b besitzt das Kunststoff-Basisteil 1, wie Fig.3 zeigt, eine Aufnahmebohrung 9 für die darin eingesetzte, vorzugsweise aus Tiefziehstahl bestehende Einlagebüchse 2, die die Schraubgewindebohrung 3 enthält. Die Einlagebüchse 2 besitzt einen rechteckförmig konturierten Randflansch 2' mit dem sie auf einer oberhalb der Aufnahmebohrung 9 gelegenen Aussparung 10 im Kunststoff-Basisteil 1 aufliegt.

Weiterhin ist das Kunststoff-Basisteil 1 auf seiner Oberseite mit beiderseits der die Schraubgewindebohrung 3 enthaltenden metallischen Einlagebüchse 2 gelegenen, angeformten Vorsprüngen 11,12 versehen, die bei in die Profilnut 7 entsprechend Fig.2 und 3 eingeschwenktem Nutenstein in den nach außen führenden Schlitz 7''' der Profilnut 7 hineinragen und dadurch für eine hinreichende Verdrehungssicherheit sorgen. Die Vorsprünge 11 und 12 können weiterhin an ihren der Einlagebüchse 2 zugewandten Rändern 11' bzw. 12' auch noch leicht vorspringende Klemmkanten aufweisen, die über die entsprechenden Kanten des Randflansches 2' der Einlagebüchse 2 greifen. Das ergibt eine einfache Klemmbefestigung der Einlagebüchse 2 im Kunststoff-Basisteil 1. Es versteht sich aber, daß eine solche Klemmbefestigung auch auf andere Weise erzielt werden kann. Ebensogut kann die Einlagebüchse 2 im Basisteil 1 auch verklebt werden.

Wie Fig.3 zeigt, ist es für die über den Nutenstein vorzunehmende Schraubbefestigung wesentlich, daß dabei die metallische Einlagebüchse 2 mit ihrem Flansch 2' unmittelbar fest gegen die Unterseite der den Profilnutschlitz 7''' flankierenden Profilleisten 7'' gepreßt wird, also eine entsprechende Abstützung von Metall auf Metall erfolgt. Das ist trotz der am Kunststoff-Basisteil 1 oberseitig vorhandenen Vorsprünge 11,12 ohne weiteres möglich, da diese lediglich in den Profilnutschlitz 7''' hineinragen, um dabei verdrehungssichernd zu wirken.

Es versteht sich, daß im Rahmen der vorliegenden Ansprüche auch noch Abänderungen möglich sind. Beispielsweise könnten im Nutenstein bzw. in seiner Einlagebüchse gegebenenfalls auch mehrere Schraubgewindebohrungen vorhanden sein.

## Patentansprüche

1. In T-förmig hinterschnittene Nuten (7) von Profilstäben (8) od.dgl. einsetzbarer Nutenstein mit einem im wesentlichen keilförmigen Querschnitt, mit einem aus Kunststoff bestehenden, von einem Längsschlitz (4) gebildeten Federbügelarm (5), der sich in Längsrichtung des Nutensteins erstreckt und eine Klemmstelle (6) aufweist, und mit einer senkrecht zum Längsschlitz (4) verlaufenden Schraubgewindebohrung (3), **dadurch gekennzeichnet,** daß der Federbügelarm (5) im Bereich einer Keilscheitellinie (1') des in die Nut einschwenkbaren Nutensteins angeordnet ist sowie an seinem freien, federnd nachgiebigen Ende (5') die Klemmstelle aufweist (5), und daß die Schraubgewindebohrung (3) außerhalb eines von dem Längsschlitz (4) gebildeten Bereichs (la) angeordnet ist.

2. Nutenstein nach Anspruch 1, **dadurch gekennzeichnet**, daß die Klemmstelle (6) aus einem am freien Ende (5') des Kunststoff-Federbügelarms (5) unterseitig angeformten Klemmknopf besteht.

3. Nutenstein nach Anspruch 1 oder 2, **dadurch gekennzeichnet**, daß er ein den keilförmigen Querschnitt besitzendes Basisteil (1) aus Kunststoff aufweist, das in Längsrichtung etwa hälftig unterteilt, einerseits den zur Ausformung des Federbügelarms (5) mit dem Längsschlitz (4) versehenen Gabelbereich (la) und andererseits einen mit einer die Schraubgewindebohrung (3) enthaltenden, metallischen Einlagebüchse (2) versehenen Bohrungsaufnahmebereich (1b) aufweist.

4. Nutenstein nach Anspruch 3, **dadurch gekennzeichnet**, daß das Kunststoff-Basisteil (1) in seinem Bohrungsaufnahmebereich (1b) mit einer durchgehenden, die metallische Einlagebüchse (2) enthaltenden Aufnahmebohrung (9) und einer oberhalb davon angeordneten flachen Aussparung (10) versehen ist, auf der die mit einem entsprechenden Randflansch (2') versehene metallische Einlagebüchse (2) aufliegt.

5. Nutenstein nach Anspruch 4, **dadurch gekennzeichnet**, daß auf der Oberseite des Kunststoff-Basisteils (1) zu beiden Seiten der die Schraubgewindebohrung (3) enthaltenden metallischen Einlagebüchse (2) verdrehungssichernde Vorsprünge (11,12) angeformt sind.

6. Nutenstein nach Anspruch 5, **dadurch gekennzeichnet**, daß der an der metallischen Einlagebüchse (2) vorhandene Randflansch (2') rechteckförmig konturiert ist und an den ihm zugewandten Rändern (11',12') der verdrehungssichernden Vorsprünge (11,12) des Basisteils (1) Klemmkanten vorgesehen sind, die leicht klemmend über die entsprechenden Kanten des Randflansches (2') greifen.

## Claims

1. Tenon block, which can be inserted into grooves (7), which are undercut in a T-shaped manner, of profiled bars (8) or the like, having a substantially wedge-shaped cross-section, having a spring bracket arm (5) which consists of synthetic material, is formed by a longitudinal slot (4), extends in the longitudinal direction of the tenon block and comprises a clamping site (6), and having a screw-threaded bore (3), which extends in a perpendicular manner with respect to the longitudinal slot (4), characterised in that the spring bracket arm (5) is disposed in the region of a wedge apex line (1') of the tenon block, which can be pivoted into the groove, and said spring bracket arm comprises (5) [sic] on its free, resiliently flexible end (5') the clamping site, and that the screw-threaded bore (3) is disposed outside a region (1a) which is formed by the longitudinal slot (4).

2. Tenon block according to claim 1, characterised in that the clamping site (6) consists of a clamping knob which is integrally formed on the lower side on the free end (5') of the synthetic material spring bracket arm (5).

3. Tenon block according to claim 1 or 2, characterised in that it comprises a synthetic material base part (1) which has a wedge-shaped cross-section and which is divided approximately in half in the longitudinal direction, comprises on the one side the fork region (1a), which is provided with the longitudinal slot (4) in order to form the spring bracket arm (5), and comprises on the other side a bore receiving region (1b) which is provided with a metallic insert bushing (2) which contains the screw-threaded bore (3).

4. Tenon block according to claim 3, characterised in that the synthetic material base part (1) is provided in its bore receiving region (1b) with a through-going receiving bore (9), which contains the metallic insert bushing (2), and said base part is provided with a flat recess which is disposed above said receiving bore and on which lies the metallic insert bushing (2) which is provided with a corresponding edge flange (2').

5. Tenon block according to claim 4, characterised in that projections (11, 12), which prevent any rotational movement, are integrally formed on the upper side of the synthetic material base part (1) on both sides of the metallic insert bushing (2) which contains the screw-threaded bore (3).

6. Tenon block according to claim 5, characterised in that the edge flange (2'), which is provided on the metallic insert bushing (2), is formed with a rectangular contour and clamping edges are provided on the edges (11', 12'), facing said edge flange, of the projections (11, 12), which prevent any rotational movement, of the base part (1), said clamping edges engaging over the corresponding edges of the edge flange (2') so as to perform a slight clamping function.

## Revendications

1. Coulisseau apte à être placé dans des rainures contre-dépouillées en T (7) de barres profilées (8) ou d'éléments similaires, présentant une section transversale globalement cunéiforme et comportant un bras d'étrier à ressort en matière plastique (5) qui est défini par une fente oblongue (4), qui s'étend dans le sens longitudinal du coulisseau et qui présente un point de serrage (6), et un perçage fileté (3) perpendiculaire à la fente oblongue (4), **caractérisé** en ce que le bras d'étrier à ressort (5) est disposé dans la zone d'une ligne de sommet de coin (1') du coulisseau apte à être introduit par pivotement dans la rainure, et présente le point de serrage à son extrémité libre (5') qui est flexible comme un ressort, et en ce que le perçage fileté (3) est disposé à l'extérieur d'une zone (la) définie par la fente oblongue (4).

2. Coulisseau selon la revendication 1, **caractérisé** en ce que le point de serrage (6) se compose d'un bouton de serrage rapporté sur le côté inférieur de l'extrémité libre (5') du bras d'étrier à ressort en matière plastique (5).

3. Coulisseau selon la revendication 1 ou 2, **caractérisé** en ce qu'il comporte une partie de base en matière plastique (1) qui présente la section transversale cunéiforme et qui, divisée à peu près à la moitié dans le sens longitudinal, comporte d'une part la zone de fourche (la) pourvue de la fente oblongue (4) en vue de la déformation du bras d'étrier à ressort (5), et d'autre part une zone de réception de perçage (1b) pourvue d'une douille métallique rapportée (2) qui contient le perçage fileté (3).

4. Coulisseau selon la revendication 3, **caractérisé** en ce que la partie de base en matière plastique (1) est pourvue, dans sa zone de réception de perçage (1b), d'un perçage de positionnement continu (9) qui contient la douille métallique rapportée (2), et d'un évidement plat (10) qui est disposé au-dessus dudit perçage (9) et sur lequel est posée la douille métallique rapportée (2) pourvue d'une bride extérieure correspondante (2').

5. Coulisseau selon la revendication 4, **caractérisé** en ce qu'il est prévu, rapportées sur le côté supérieur de la partie de base en matière plastique (1), des deux côtés de la douille métallique rapportée (2) contenant le perçage fileté (3), des saillies (11, 12) qui empêchent une torsion.

6. Coulisseau selon la revendication 5, **caractérisé** en ce que la bride extérieure (2') prévue sur la douille métallique rapportée (2) a un contour rectangulaire et en ce qu'il est prévu, sur les bords (11', 12') des saillies empêchant une torsion (11, 12) de la partie de base (1) qui sont tournés vers ladite bride (2'), des arêtes de serrage qui exercent une légère action de serrage sur les arêtes correspondantes de la bride extérieure (2').
